# EUROPEAN PATENT SPECIFICATION

(11) **EP 1 101 569 B1**
(45) Date of publication and mention of the grant of the patent: **19.05.2004**
(21) Application number: 00309136.0
(22) Date of filing: 17.10.2000
(51) Int. Cl.: B25D 1/00, B25D 1/02

(54) **Glass-breaking device / axe**
Gerät / Beil zum Brechen von Glas
Appareil / Hache à casser du verre

(30) Priority: 15.11.1999 GB 9926692
(43) Date of publication of application: 23.05.2001
(73) Proprietor: Rhodes, A., Cheltenham, Glos GL52 3DY (GB)
(72) Inventor: Rhodes, A., Cheltenham, Glos GL52 3DY (GB)

(56) References cited:
- EP-A- 0 845 333
- DE-A- 4 300 471
- GB-A- 905 150
- US-A- 2 778 256
- US-A- 5 952 916

## Description

This invention relates to a Glass-Breaking device.

Glass-breaking devices are normally associated with emergency escape through a glazed aperture. This means of escape is usually required because of an accident of some nature, such as fire, chemical spill, flooding or other reason where there is direct threat to life through entrapment. I.E: Vehicles, buildings or other enclosed spaces. As an example device, the Rail Network provides a steel hammer for use in its rolling stock.

### Prior Art:

DE 4300471 is a known device, having a shaft, a handle and a hammer flash on the handle, away from the hammerhead. The head of the flash is constructed in such a way as to have a point at the end. Due to the design, limited point contact with the glass will result should the striking angle be moved away from the longitudinal axis of the hammerhead relative to the glass, resulting in failure of the said device to break the glass when in use.

### Summary of the invention

The present invention consists of a hammer according to claim 1, further preferred embodiments are set out in the subsequent claims.

The present invention overcomes the problem of limited point contact should the striking angle be moved away from the longitudinal axis of the hammerhead relative to the glass, with the provision of more than one angular point, thus allowing varying angular point contact relative to the longitudinal axis to be obtained.

Utilizing the handle (9), the user propels by the hand the whole towards the glass pane surface, the raised projections making contact with the glass surface first which damages the surface of the glass pane and leads to failure and smashing of the glass pane.

The invention being suitable for other applications and is therefore, not restricted to glazing.

A specific embodiment of the invention will now be described by way of examples and reference to the accompanying drawings in which.
- SHEET 1/6: Shows a view of the front, side and rear of an example device.
- SHEET 2/6: View showing front, side and rear of an example device with multiple blades fitted to the head of the device
- SHEET 3/6: Views of the blade, weights and blade/weight sub assembly.
- SHEET 4/6: Views showing an example of angles when striking the glass
- SHEET 5/6: Views showing alternative construction of an example device with extended glass shield.
- SHEET 6/6: View shows "transfer" for window/glass user advice.

### Referring to Sheet 1/6.

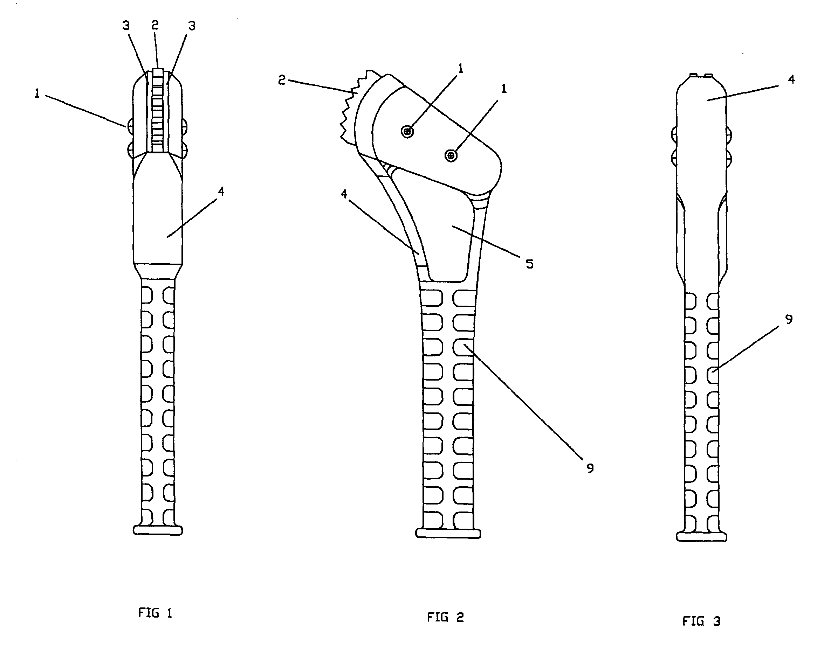

- Fig 1: The example device comprises of a body (4), a blade (2), a weight (3), and a retaining device such as a nut and bolt (1). The view shows the glass shield (4), which is an integral part of the body of the device.
- Fig 2: A side view of the device showing the body and glass shield (4), the handle (9), recess within the body (5), retaining devices (1) and the blade (2).
- Fig 3: The rear view of the device body (4), and view of the formed handle (9).

### Referring to Sheet 2/6

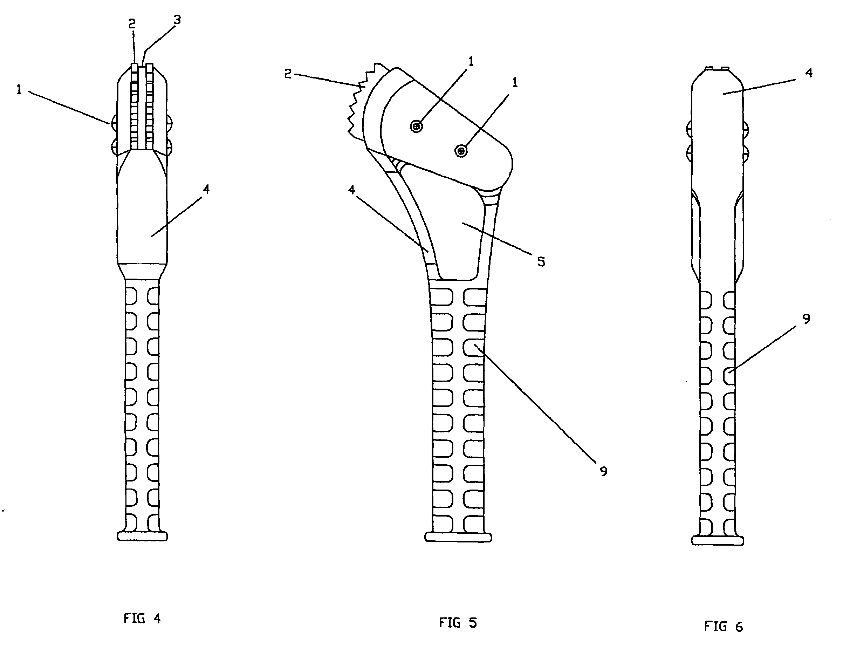

- Fig 4: The device showing the front view with multiple blades (2), retaining device (1) and body/glass shield (4).
- Fig 5: As fig 2 with multiple blades (2) added.
- Fig 6: As fig 3.

### Referring to Sheet 3/6

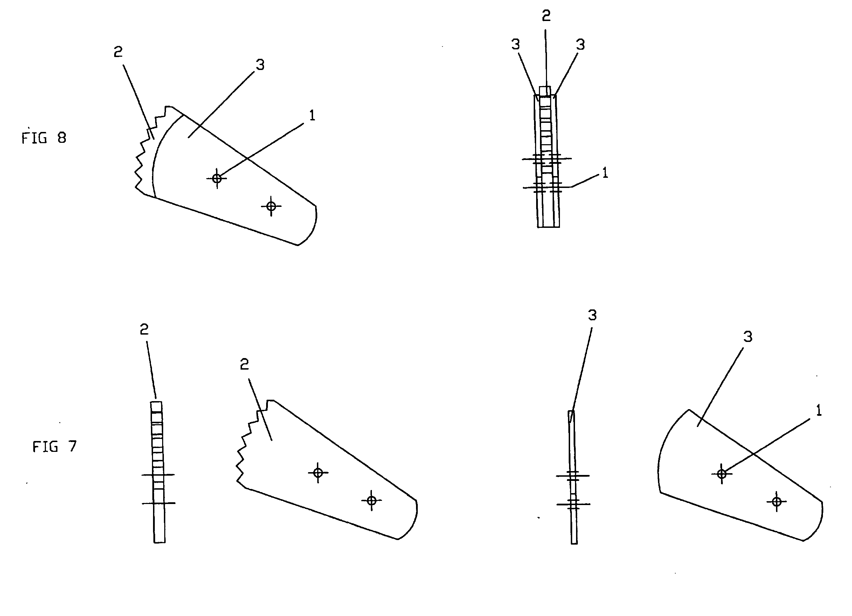

- Fig 7: Blades (2), together with the formed and weights (3) and retaining holes (1).

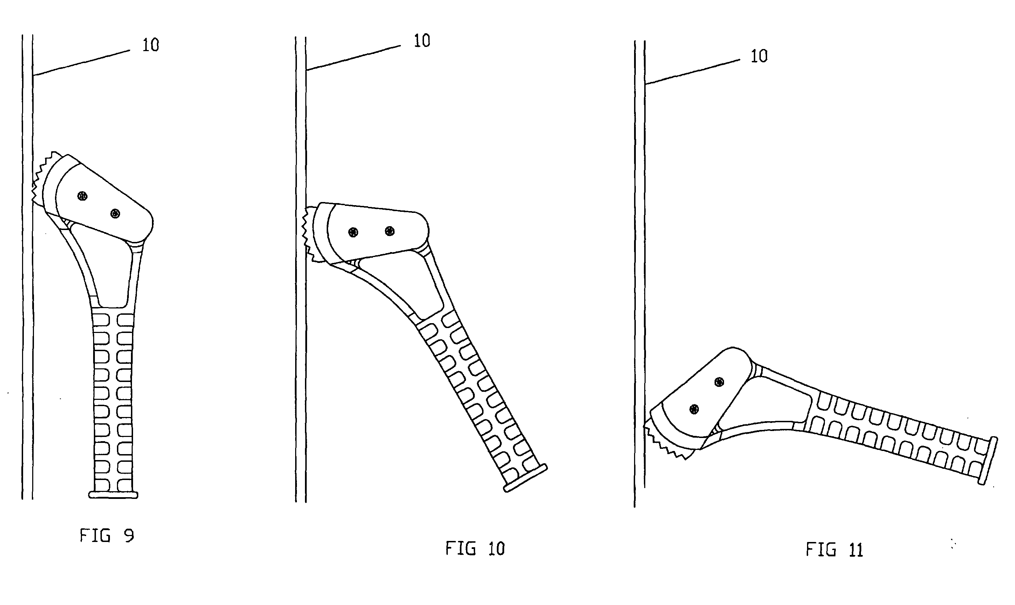

- Fig 8: A blade (2) and weights (3) as one assembly.

### Referring to Sheet 4/6

- Fig 9: A striking angle and glass.
- Fig 10: As fig 9, altered striking angle.

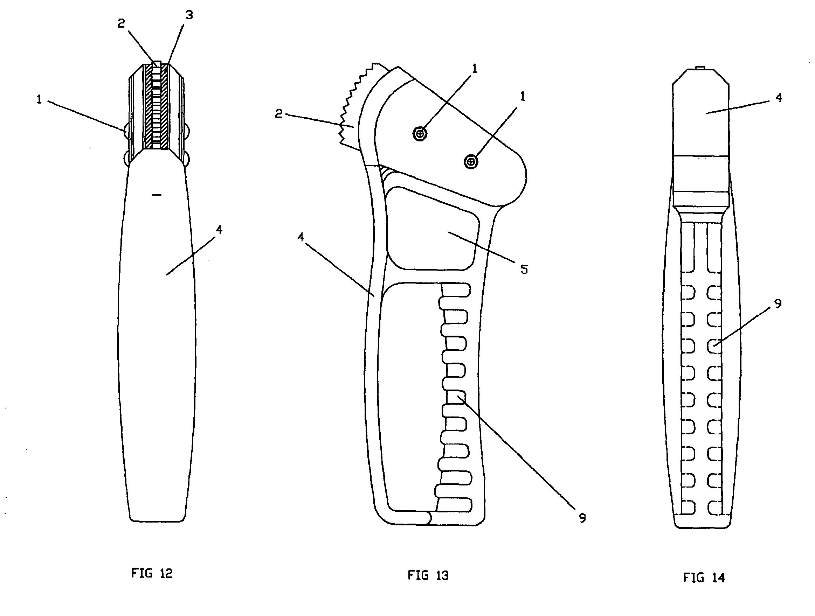

- Fig 11: As fig 9, altered striking angle.

### Referring to Sheet 5/6

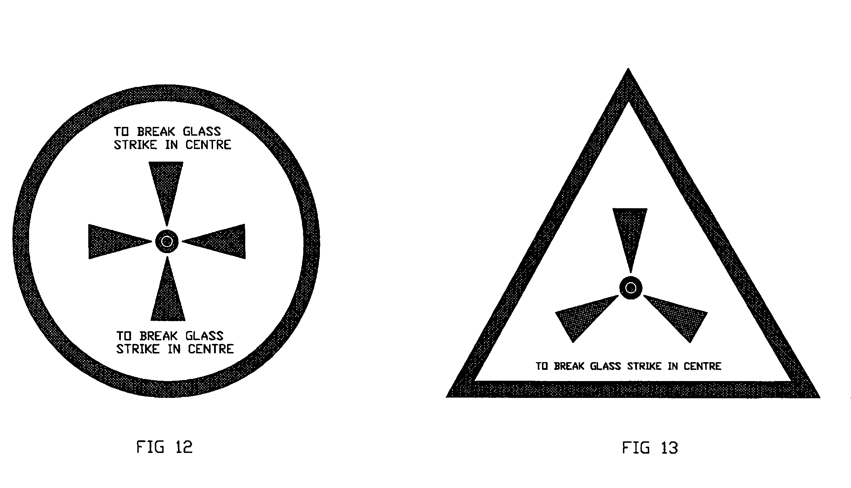

- Fig 12: The device being modified and adapted to show a variation of the body/glass shield (4) and handle (9).

### Referring to Sheet 6/6

- Fig 13/14: Two variations of a glass advice transfer.

Please refer to drawings 1 through 6, for additional technical information.

### DRAWING REFERENCE INDEX

| **Reference Number** | **Description** |
|---|---|
| 1 | Retaining device |
| 2 | Blade with projections at the perimeter |
| 3 | Weights |
| 4 | Body of the device |
| 5 | Cavity within the device body |
| 6 | Spare -- |
| 7 | Spare -- |
| 8 | Spare -- |
| 9 | Handle of the device |
| 10 | Glass |

## Claims

1. A glass breaking device comprising a body (4), and a blade (2), wherein; said body is incorporating a longitudinally shaped handle (9), and said blade is protruding away from the body in a direction generally radially of a longitudinal axis of the handle (9), **characterised in that** the said blade is incorporating more than one raised projection at the outer perimeter thereof.

2. A device as claimed in claim 1, wherein the projections form a keen edge or point.

3. A device as claimed in claim 1 or 2, wherein an additional blade or blades (2), or additional weight or weights (3) are added.

4. A device as claimed in claim 1, 2 or 3, wherein the blade (2), the body (4), and handle (9), are combined and formed as a single entity.

5. A device as claimed in claim 1, wherein the body (4) and handle (9) incorporates a glass shield, for protection of the hand, and is attached at the upper and lower portion of the body (4) and handle (9), optionally, the glass shield is formed as an integral part of the body (4) and handle (9).

6. A device as claimed in any preceding claim, wherein the outer perimeter of the blade (2) is curved and the raised projections are formed or attached thereon.

7. A device as claimed in claimed in any preceding claim, wherein the body (4) or handle (9) or combination, incorporates a sharp blade suitable for cutting material.

8. A device as claimed in any preceding claim, wherein the device incorporates a safety warning device, audible or otherwise, that will be activated during use or when tampered with, and optionally incorporates a light sensitive material/paint that will glow in the dark or when ordinary daylight diminishes.

9. A device as claimed in claim 3, wherein the blade or blades (2), and weights (3) if so desired, are coupled within a cavity of the body (4).

10. A device as claimed in claim 1-3, or 9, wherein a coupling means (1) is provided for coupling the blade to the body (9).

## Patentansprüche

1. Eine Vorrichtung zum Zerbrechen von Glas, welche aus einem Hauptkörper (4) und einer Klinge (2) besteht, wobei der besagte Hauptkörper einen longitudinal geformten Griff (9) enthält und die besagte Klinge in einer Richtung vom Hauptkörper absteht, generell radial zur Längsachse des Griffes (9), und **dadurch charakterisiert ist, daß** die besagte Klinge an ihrer äußeren Begrenzung mehr als eine erhöhte Projektion enthält.

2. Eine Vorrichtung, wie unter Anspruch 1 behauptet, wobei die Projektionen eine scharfe Kante oder Punkt bilden.

3. Eine Vorrichtung, wie unter Anspruch 1 oder 2 behauptet, wobei eine zusätzliche Klinge oder Klingen (2), oder zusätzliches Gewicht oder Gewichte (3) hinzugefügt werden.

4. Eine Vorrichtung, wie unter Anspruch 1, 2 oder 3 behauptet, wobei die Klinge (2), der Hauptkörper (4) und der Griff (9) kombiniert sind und eine einzige Einheit bilden.

5. Eine Vorrichtung, wie unter Anspruch 1 behauptet, wobei der Hauptkörper (4) und Griff (9) einen Glassicherheitsschild zum Schutz der Hand enthalten, und dieser am oberen oder unteren Abschnitt des Hauptkörpers (4) und Griffes (9) angebracht ist, auf Wunsch ist der Glassicherheitsschild als ein Bestandteil des Körpers (4) und Griffes (9) geformt.

6. Eine Vorrichtung, wie unter allen vorhergehenden Ansprüchen behauptet, wobei die äußere Begrenzung der Klinge (2) gebogen ist und die erhöhten Projektionen geformt oder daran angebracht sind.

7. Eine Vorrichtung, wie unter allen vorhergehenden Ansprüchen behauptet, wobei der Hauptkörper (4) oder Griff (9) oder eine Kombination eine scharfe Klinge enthält, die zum Schneiden von Material geeignet ist.

8. Eine Vorrichtung, wie unter allen vorhergehenden Ansprüchen behauptet, wobei die Vorrichtung ein Sicherheitswarngerät enthält, hörbar oder auf andere Art wahrnehmbar, das während des Einsatzes oder bei unsachgemäßer Benutzung aktiviert wird, und welches wahlweise ein lichtempfindliches Material/Farbe enthält, das/die in der Dunkelheit oder bei Abnahme des normalen Tageslichtes glüht.

9. Eine Vorrichtung, wie unter Anspruch 3 behauptet, wobei die Klinge oder Klingen (2), und Gewichte (3), falls gewünscht, innerhalb eines Hohlraumes des Hauptkörpers (4) zusammengeschlossen sind.

10. Eine Vorrichtung, wie unter Anspruch 1-3 oder 9 behauptet, wobei eine Anschlußvorrichtung (1) zum Anschluß der Klinge an den Hauptkörper (4) zur Verfügung steht.

## Revendications

1. Un appareil qui casse le verre, comprenant une coque (4) et une lame (2) à l'intérieur; cette coque inclut une poignée de forme longitudinale (9), et cette lame est en saillie à l'extérieur de la coque dans une direction généralement en radiation de l'axe longitudinal de la poignée (9), **caractérisée par le fait que** cette lame inclut plus qu'une projection élevée sur le périmètre extérieur de celle-ci.

2. Un appareil comme dans la revendication 1, où les projections forment un bord aiguisé ou une pointe

3. Un appareil comme dans les revendications 1 et 2, mais où une ou plusieurs autres famés (2), ou un ou plusieurs poids (3) supplémentaires, peuvent être ajoutés

4. Un appareil comme revendiqué dans les revendications 1, 2, ou 3, mais où la lame (2), la coque (4) et la poignée (9) sont fusionnés et forment une unité entière.

5. Un appareil comme dans la revendication 1 où la coque (4) et la poignée (9) comprennent une protection contre le verre, pour protéger la main, et est attaché à la partie supérieure et à la partie inférieure de la coque (4) et de la poignée (9), en option, le bouclier de verre fait partie intégrale de la coque (4) et de la poignée (9).

6. Un appareil comme revendiqué dans n'importe quelle revendication précédente, où le périmètre extérieur de la lame (2) est courbe et les projections élevées y sont formes ou attachées.

7. Un appareil comme revendiqué dans n'importe quelle revendication précédente, où la coque (4) ou la poignée (9) ou une combinaison, incorpore une lame coupante pour couper des matériaux.

8. Un appareil comme dans les revendications précédentes, où l'appareil incorpore un appareil d'alarme de sécurité, audible ou autre, qui sera activé pendant l'utilisation ou le crochetage, et peut optionnellement incorporer un matériau/peinture sensible à la lumière, qui brillera dans le noir ou quand la lumière naturelle diminue.

9. A un appareil, comme revendiqué dans la revendication 3, où la ou les lames (2) et les poids (3), si voulus ainsi, sont ajoutés dans une cavité de la coque (4).

10. Un appareil comme revendiqué dans les revendications 1 - 3 ou 9, où un moyen de couplage (1) est fourni pour coupler la lame à la coque (4).
